# EUROPÄISCHE PATENTSCHRIFT

(11) **EP 3 512 002 B1**
(45) Veröffentlichungstag und Bekanntmachung des Hinweises auf die Patenterteilung: **19.01.2022**
(21) Anmeldenummer: 18213915.4
(22) Anmeldetag: 19.12.2018
(51) Int. Cl.: H01M 50/502

(54) **ZELLVERBINDER ZUR ELEKTRISCHEN VERBINDUNG VON ZELLTERMINALS EINER ENERGIESPEICHEREINRICHTUNG**
CELL CONNECTOR FOR ELECTRICAL CONNECTION OF CELL TERMINALS OF AN ENERGY STORAGE DEVICE
CONNECTEUR DE CELLULE DESTINÉ À LA CONNEXION ÉLECTRIQUE DES BORNES DE CELLULE D'UN DISPOSITIF ACCUMULATEUR D'ÉNERGIE

(30) Priorität: 13.01.2018 DE 102018000258
(43) Veröffentlichungstag der Anmeldung: 17.07.2019
(73) Patentinhaber: Diehl Metal Applications GmbH, 14167 Berlin (DE)
(72) Erfinder: Weber, Ingo, 14469 Potsdam (DE); Fang, Zhiwei, 14197 Berlin (DE)
(74) Vertreter: Diehl Patentabteilung

(56) Entgegenhaltungen:
- DE-A1-102009 058 723
- DE-A1-102010 019 708
- DE-A1-102011 075 835
- DE-A1-102011 080 977
- DE-A1-102015 201 792
- DE-B4-102009 058 723

## Beschreibung

Die Erfindung betrifft einen Zellverbinder zur elektrischen Verbindung von Zellterminals einer Energiespeichereinrichtung, aufweisend Kontaktierungselemente zur Verbindung mit jeweils zumindest einem Zellterminal und ein zwei Kontaktierungselemente elektrisch miteinander verbindendes Ausgleichselement mit zumindest einer federnden Leitungsbahn.

Zellverbinder sind aus der WO 2009/080148 A2 bekannt in Form eines an beiden Stirnenden gelochten, massiven Hochstrom-Überbrückungsriegels zwischen einander benachbarten ungleichnamigen Zellpolen von zum Batteriepack in Serie zu schaltenden einzelnen elektrochemischen Zellen. In die Löcher jedes Zellverbinders sind Ausgleichshülsen eingesetzt, deren Außendurchmesser kleiner und deren axiale Länge größer als das jeweilige Loch ist. In diese Hülsen greifen die frei vorragenden Pole der Zellen ein. Dabei verlagert sich jede der Ausgleichshülsen innerhalb ihres Loches nach Maßgabe der fertigungsbedingten Toleranzen der Polpositionen. Anschließend werden die so individuell positionierten Ausgleichshülsen einerseits mit ihren Zellenpolen und andererseits mit dem Zellverbinder verschweißt. Infolge des Toleranzausgleiches über die zunächst noch im Zellverbinder verlagerbaren Hülsen werden die Zellen dadurch zwar ohne mechanische Krafteinleitung miteinander verschaltet. Aber wegen der massiven Zellverbinder drohen doch erhebliche Zerstörungskräfte, wenn die Zellpole sich nach dem Festschweißen der Hülsen betriebserwärmungsbedingt verlagern.

Zur Lösung dieses Problems ist aus der DE 102011080977 A1 ein Zellverbinder mit flexiblen Leitungsbahnen im Ausgleichsbereich bekannt. Der Ausgleichsbereich besteht aus mehreren durch Folien voneinander getrennten metallischen Schichten, die durch eine Wölbung nach oben einen federnden Längenausgleich und damit eine Bewegung der Pole zueinander ermöglichen.

Weitere Zellverbinder mit einer gewissen Flexibilität im Verbindungsbereich zwischen den Kontaktierungsbereichen der Zellterminals sind aus der DE 10 2011 075 835 A1, der DE 10 2009 058 723 A1, der DE 10 2015 201 792 A1 und der DE 10 2010 019 708 A1 bekannt.

Es ist eine Aufgabe der vorliegenden Erfindung, einen kompakten Zellverbinder anzugeben.

Diese Aufgabe wird durch einen Zellverbinder entsprechend den Merkmalen von Patentanspruch 1 gelöst, bei dem die Leitungsbahn vollständig in einer Ebene mit den beiden Kontaktierungselementen verläuft.

Die Erfindung geht von der Überlegung aus, dass aufgrund von immer engeren Bauvorgaben immer flachere Zellverbinder von Vorteil sind. Gleichzeitig müssen diese aber sowohl Lage- und Montagetoleranzen als auch einen sich ändernden Abstand der einzelnen Zellterminals beim Laden und Entladen der Energiespeichereinrichtung ausgleichen. Durch die Lage der Leitungsbahn vollständig in einer Ebene mit den beiden Kontaktierungselementen kann ein sehr flacher Zellverbinder erreicht werden, der eine kompakte Bauweise der gesamten Energiespeichereinrichtung ermöglicht. Die federnde Leitungsbahn kann hierbei sowohl Lage- und Montagetoleranzen als auch Bewegungen der Zellterminals zueinander ausgleichen, ohne dass zu große Kräfte auf die Zellterminals wirken.

Die beiden Kontaktierungselemente des Zellverbinders können ein ebenes Blech aufweisen, auf ihrer Oberseite oder insgesamt aus dem flachen Blech bestehen. Auf ihrer Unterseite können die Kontaktierungselemente ein oder mehrere Befestigungselemente aufweisen, mit denen der Zellverbinder bei der Montage der Energiespeichereinrichtung am jeweiligen Zellterminal befestigt wird. Die Befestigungselemente können nach unten aus der Ebene, die durch die beiden Kontaktierungselemente vorgegeben ist, herausragen.

Der Verlauf der Leitungsbahn vollständig in der Ebene der beiden Kontaktierungselemente kann so verstanden werden, dass die beiden Kontaktierungselemente ebene Elemente mit einer vorgegebenen Dicke sind, insbesondere über einen Kontaktierungsbereich konstante Dicke, wobei die Dicke senkrecht zu dieser Ebene verstanden werden kann. Die Ebene kann nun im Bereich dieser Dicke liegen, zweckmäßigerweise parallel zu einer Oberseite der Kontaktierungselemente.

Die Leitungsbahn liegt vollständig in dieser Ebene der beiden Kontaktierungselemente. Die Leitungsbahn kann hierbei nach oben und/oder unten über die Kontaktierungselemente hinausragen, wichtig ist jedoch, dass sie über ihre vollständige Länge von einem zum anderen Kontaktierungselement in der Ebene verläuft, also die Ebene über diese vollständige Länge der Leitungsbahn durch diese verläuft. Besonders kompakt kann der Zellverbinder sein, wenn die Leitungsbahn mit ihrer Dicke vollständig innerhalb der Dicke der beiden Kontaktierungselemente liegt.

Um eine Beweglichkeit der Kontaktierungselemente zueinander zu erleichtern, ist es sinnvoll, wenn die Leitungsbahn einen Materialquerschnitt aufweist, der geringer ist, als der Materialquerschnitt der Kontaktierungselemente. Der Materialquerschnitt ist hierbei zweckmäßigerweise quer zur Stromflussrichtung im regulären Betrieb des Zellverbinders zu sehen. Die Leitungsbahn kann mehrere Leitungselemente aufweisen, die zweckmäßigerweise in Stromflussrichtung parallel zueinander angeordnet sind.

Bei hohen Stromflüssen ist ein großer Querschnitt der Leitungsbahn von Bedeutung. Bei einer zu starken Querschnittsverjüngung von einem Kontaktierungselement zur Leitungsbahn hin kann der elektrische Widerstand der Leitungsbahn zu stark werden und damit zu einer unerwünschten Wärmebildung führen. Um dies zu verhindern, kann das Ausgleichselement mehrere aufeinandergestapelte metallische Lagen aufweisen, beispielsweise mehrere Bleche übereinander. Diese sind zweckmäßigerweise über ihre gesamte Länge elektrisch kontaktierend aufeinandergelegt und können materialschlüssig miteinander verbunden sein, beispielsweise durch Verschweißen miteinander.

Bei mehreren metallischen Lagen der Kontaktierungselemente kann sich der Bereich, in dem die durch die Kontaktierungselemente gebildete Ebene liegen kann, über alle solche Lagen erstrecken.

Die Einbauhöhe der Energiespeichereinrichtung kann durch die zweidimensionale Konstruktion von Leitungsbahnen mit den beiden Kontaktierungselementen gering gehalten werden. Es kann jedoch sein, dass in Breitenrichtung Bauraum zur Verfügung steht. Ein solcher Bauraum kann gut genutzt werden, wenn die Leitungsbahn in der Breitenrichtung über die Breite der Kontaktierungselemente hinausragt. Die Stromtragfähigkeit und/oder die Elastizität der Leitungsbahn beziehungsweise deren Federvermögen kann hierdurch vergrößert werden. Längenrichtung, Breitenrichtung und Dicke sind zweckmäßigerweise als ein dreidimensionales und orthogonales Richtungssystem zu verstehen, wobei die Längenrichtung die Richtung von einem Kontaktierungselement zu dem anderen ist beziehungsweise von einem Zellterminal zu dem mit ihm verbundenen anderen Zellterminal, die Breitenrichtung ebenfalls in der Ebene der beiden Kontaktierungselemente verläuft und die Dickenrichtung senkrecht zu den beiden erstgenannten Richtungen verläuft.

Ein kompakter und hinsichtlich der Stromtragfähigkeit leistungsfähiger Zellverbinder kann erreicht werden, wenn die beiden Kontaktierungselemente und das Ausgleichselement als ebenes Metallblech ausgeführt sind. Zweckmäßigerweise bilden alle drei Elemente ein gemeinsames Blech, sind also gemeinsam einstückig ausgeführt. Das Blech kann hierbei über seine gesamte Länge über die beiden Kontaktierungselemente und das Ausgleichselement sowohl in Längenrichtung als auch in Breitenrichtung gleichmäßig dick sein. Es ist auch möglich, dass das Blech im Bereich des Ausgleichselements dicker ist als im Bereich der beiden Kontaktierungselemente.

Eine einfache Herstellung des Zellverbinders kann erreicht werden, wenn die beiden Kontaktierungselemente und das Ausgleichselement gemeinsam ein Stanzteil sind. Die Leitungsbahn kann in einfacher Weise hergestellt werden. Ebenfalls möglich ist das Schneiden der Kontaktierungselemente und des Ausgleichselements mittels Wasserstrahl oder Laser oder dergleichen, wobei Stanzteil und anders geschnittenes Teil im Oberbegriff als Schnittteil bezeichnet werden können.

Die Leitungsbahn ist - insbesondere durch deren Verjüngung gegenüber den Kontaktierungselementen - federnd ausgeführt, sodass sie Positionsänderungen der beiden Zellterminals zueinander ausgleicht. Um die Federwirkung in Längenrichtung zu erhöhen, ist es vorteilhaft, wenn die Leitungsbahn im Ausgleichselement eine Richtungsänderung um zumindest 90° aufweist. Zumindest ein Teil der Leitungsbahn verläuft hierdurch angewinkelt, insbesondere senkrecht zur Längenrichtung, sodass eine vorteilhafte Federwirkung erreicht wird.

Die Federwirkung kann nochmals erhöht werden, wenn die Leitungsbahn im Ausgleichselement zumindest zwei gegenläufige Richtungsänderungen um zumindest 70° aufweist.

Eine gute Federwirkung in mehrere Richtungen wird ermöglicht dadurch, dass die Leitungsbahn im Ausgleichselement eine U-Form bildet. Diese kann in der Ebene mit den beiden Kontaktierungselementen und quer zu einer gedachten Verbindungslinie liegen, die die beiden Zellterminals beziehungsweise die beiden Kontaktierungselemente miteinander verbindet. Diese Verbindungslinie kann in Längenrichtung liegen.

Eine nochmalige Verbesserung der Federwirkung kann erreicht werden, wenn die Leitungsbahn im Ausgleichselement eine Mäanderform bildet. Eine Mäanderform kann verstanden werden als eine sich hin und her windende Linie mit zwei gegenläufigen Windungen um jeweils zumindest 150°, insbesondere jeweils zumindest 240°, und einem zwischen den Windungen liegenden Wendepunkt.

In der Regel wird es so sein, dass die Leitungsbahn in entgegengesetzter Richtung in die beiden Kontaktierungselemente einmündet. Die Einmündungen der Leitungsbahn in die beiden Kontaktierungselemente verlaufen insofern antiparallel zueinander. Dies ist jedoch nicht unbedingt notwendig, insbesondere wenn eine einfache Form der Leitungsbahn gewünscht ist, die beispielsweise eine hohe Stromtragfähigkeit ermöglicht. Es ist ausreichend, wenn die Leitungsbahn eine ungerade Anzahl Knicke aufweist, wobei drei Knicke, insbesondere nur ein Knick, vorteilhaft ist. Knicke müssen hierbei nicht scharf geführt sein, sondern können - unabhängig von ihrer Anzahl - auch in gerundeter Form erfolgen, insbesondere um Spitzen in der Stromdichte im Bereich zu enger Radien zu vermeiden.

Um die Stromtragfähigkeit des Zellverbinders im Bereich des Ausgleichselements groß zu halten, ist es vorteilhaft, wenn die Dicke des Ausgleichselements größer als eine Dicke der beiden Kontaktierungselemente ist. Ein besonders flacher Aufbau des Zellverbinders wird hierbei erfindungsgemäß dadurch realisiert, dass die beiden Kontaktierungselemente und das Ausgleichselement gemeinsam ein Stufenband bilden. Das Stufenband hat dabei zumindest zwei Dicken, eine erste Dicke im Bereich der Kontaktierungselemente und eine zweite, größere Dicke im Bereich des Ausgleichselements. Die größere Dicke im Bereich des Ausgleichselements kann hierdurch ohne ein Fügeverfahren zweier aufeinander gelegter Bleche oder Bänder erfolgen, sodass ein gleichmäßiger elektrischer Widerstand ohne durch Fügung entstandene Störbereiche vorhanden ist. Hierdurch kann das Stufenband mit hoher Stromtragfähigkeit und dennoch auch im Bereich der größeren Dicke verhältnismäßig flach ausgeführt sein, sodass der Zellverbinder insgesamt flach bauend konstruierbar ist. Ein Stufenband kann in diesem Zusammenhang ein Band beziehungsweise Blech sein, das in einem Stück zwei Dicken aufweist, wobei die beiden Dickenbereiche durch eine Stufe voneinander getrennt sind. Die Stufenrichtung verläuft zweckmäßigerweise in Breitenrichtung.

In einer einfacheren Ausführung des Zellverbinders kann eine größere Dicke des Ausgleichselements durch eine zweite Metallbandebene erreicht werden, die auf einer zweckmäßigerweise durchgehende erste Metallbandebene aufliegt und mit dieser zusammengefügt ist. Das Ausgleichselement weist hierdurch eine größere Dicke als die beiden Kontaktierungselemente auf.

Generell können die Kontaktierungselemente in einem Übergangsbereich ebenfalls die Dicke des Ausgleichselements aufweisen. Der Übergangsbereich ist hierbei kleiner als die Hälfte eines Kontaktierungselements.

Die bisher gegebene Beschreibung vorteilhafter Ausgestaltungen der Erfindung enthält zahlreiche Merkmale, die teilweise in einigen abhängigen Ansprüchen zu mehreren zusammengefasst wiedergegeben sind. Die Merkmale können jedoch zweckmäßigerweise auch einzeln betrachtet und zu sinnvollen weiteren Kombinationen zusammengefasst werden, insbesondere bei Rückbezügen von Ansprüchen, sodass ein einzelnes Merkmal eines abhängigen Anspruchs mit einem einzelnen, mehreren oder allen Merkmalen eines anderen abhängigen Anspruchs kombinierbar ist. Außerdem sind diese Merkmale jeweils einzeln und in beliebiger geeigneter Kombination mit der erfindungsgemäßen Vorrichtung gemäß Anspruch 1 kombinierbar.

Die oben beschriebenen Eigenschaften, Merkmale und Vorteile dieser Erfindung sowie die Art und Weise, wie diese erreicht werden, werden klarer und deutlicher verständlich in Zusammenhang mit der folgenden Beschreibung der Ausführungsbeispiele, die im Zusammenhang mit den Zeichnungen näher erläutert werden. Die Ausführungsbeispiele dienen der Erläuterung der Erfindung und beschränken die Erfindung nicht auf die darin angegebene Kombination von Merkmalen, auch nicht in Bezug auf funktionale Merkmale. Außerdem können dazu geeignete Merkmale eines jeden Ausführungsbeispiels auch explizit isoliert betrachtet, aus einem Ausführungsbeispiel entfernt, in ein anderes Ausführungsbeispiel zu dessen Ergänzung eingebracht und/oder mit einem beliebigen der Ansprüche kombiniert werden.

Es zeigen:
- FIG 1: einen Zellverbinder mit zwei Kontaktierungselementen und einem dazwischen liegendem Ausgleichselement,
- FIG 2: den Zellverbinder ais FiG 1 in einer Draufsicht von oben,
- FIG 3: einen Zellverbinder mit einem Stufenband, das im Bereich des Ausgleichselements eine größere Dicke aufweist,
- FIG 4: einen Zellverbinder mit einer mäanderförmigen Leitungsbahn im Ausgleichselement,
- FIG 5: einen Zellverbinder mit mehreren ausschließlich geraden Leitungselementen der Leitungsbahn,
- FIG 6: einen Zellverbinder mit zweifach geknickten Leitungselementen,
- FIG 7: einen Zellverbinder mit vierfach geknickten Leitungselementen,
- FIG 8: einen Zellverbinder mit zwei ineinander liegenden mäandernden Leitungselementen,
- FIG 9: einen Zellverbinder mit zwei im Bereich des Ausgleichselements zusammengefügten Metallbändern,
- FIG 10: einen Zellverbinder mit mehreren einfach geknickten Leitungselementen,
- FIG 11: einen Zellverbinder mit mehreren dreifach geknickten Leitungselementen und
- FIG 12: einen Zellverbinder mit mehr als zwei Kontaktierungselementen und jeweils dazwischen liegenden Ausgleichselementen.

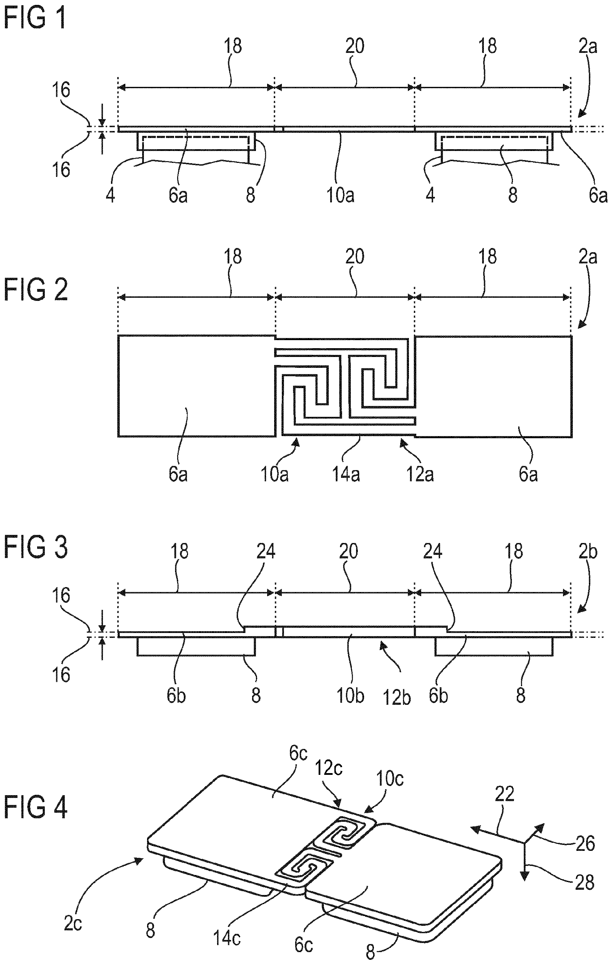

FIG 1 zeigt einen Zellverbinder 2a zum Verbinden von zwei Zellterminals 4 einer Energiespeichereinrichtung, die in FIG 1 nur schematisch angedeutet sind. Der Zellverbinder 2a umfasst zwei Kontaktierungselemente 6a, an das jeweils ein Befestigungselement 8 stoffschlüssig angebracht ist, zum Beispiel durch Verschweißen. Die Befestigungselemente 8 sind mit jeweils ihrem Zellterminal 4 verbunden, zweckmäßigerweise ebenfalls stoffschlüssig. Ein Kontaktierungselement 6a bildet mit seinem Befestigungselement 8 eine Kontaktierungseinheit. Die beiden Kontaktierungselemente 6a sind über ein Ausgleichselement 10a miteinander verbunden.

Der Zellverbinder 2a ist in FIG 2 in einer Draufsicht dargestellt. FIG 2 zeigt den Zellverbinder 2a mit den beiden Kontaktierungselementen 6a und dem Ausgleichselement 10a. Das Ausgleichselement 10a enthält eine Leitungsbahn 12a mit zwei Leitungselementen 14a, die die beiden Kontaktierungselemente 6a mechanisch und elektrisch miteinander verbinden.

Die beiden Kontaktierungselemente 6a und das Ausgleichselement 10a sind aus einem durchgängigen ebenen metallischen Band beziehungsweise Metallblech gefertigt. Das Ausgleichselement 10a enthält eine Leitungsbahn 12a mit einem oder mehreren Leitungselementen 14a. Diese können durch Stanzen oder ein anderes Schneidverfahren aus dem Band beziehungsweise Blech ausgeschnitten sein. Durch die Geometrie der Leitungselemente 14a ist die Leitungsbahn 12a federnd, sodass sie in drei translatorischen und drei rotatorischen Bewegungsrichtungen einen Ausgleich zwischen den Kontaktierungselementen 6a zulässt. Fertigungstoleranzen der Energiespeichereinrichtung und betriebsbedingte oder transportbedingte Bewegungen der Zellterminals 4 zueinander können auf diese Weise federnd ausgeglichen werden, ohne dass die Kontaktierungselemente 6a beziehungsweise der Zellverbinder 2a in unzulässiger Weise mechanisch belastet wird.

Wie aus FIG 1 zu sehen ist, verläuft die Leitungsbahn 12a beziehungsweise das Ausgleichselement 10a vollständig in der Ebene der Kontaktierungselemente 6a. In FIG 1 sind zwei Ebenen 16 durch strichpunktierte Linien angedeutet, die in der Oberseite der Kontaktierungselemente 6a beziehungsweise der Unterseite der Kontaktierungselemente 6a liegen. Bei dem in FIG 1 gezeigten Ausführungsbeispiel liegt das Ausgleichselement 10a beziehungsweise deren Leitungsbahn 12a mit ihrem gesamten Material vollständig zwischen diesen beiden Ebenen 16. Die Leitungsbahn 12a verläuft jedoch auch dann vollständig in einer Ebene mit den beiden Kontaktierungselementen 6a, wenn irgendeine Ebene, die zwischen den beiden in FIG 1 gezeigten Ebenen 16 liegt, durch die gesamte Leitungsbahn 12a verläuft, wobei die Leitungsbahn 12a oberhalb oder unterhalb der Kontaktierungselemente 6a beziehungsweise deren Ebenen 16 herausragen kann.

Dies ist beispielsweise in FIG 3 dargestellt, in der das Ausgleichselement 10b nach oben hin über die Ebene 16 herausragt, die durch die Oberseite der beiden Kontaktierungselemente 6b gebildet ist. Beide in FIG 3 gezeigten Ebenen 16 und jede Ebene zwischen diesen beiden Ebenen 16 verläuft durch das gesamte Ausgleichselement 10b und damit durch dessen Leitungsbahn 12b.

In der Längenrichtung 22, die zu FIG 4 dargestellt ist, und die parallel zu den in FIG 2 dargestellten Doppelpfeilen verläuft, ist der Zellverbinder 2a aus FIG 1 in drei Bereiche 18, 20 unterteilt. Die Kontaktierungselemente 6a liegen jeweils in ihrem Kontaktierungsbereich 18 und das Ausgleichselement 10a liegt in einem Ausgleichsbereich 20. Wie in FIG 2 zu sehen ist, wird die Grenze zwischen den Bereichen 18, 20 durch die Linie gebildet, an denen sich die Kontaktierungselemente 6a in Längenrichtung 22 zur Leitungsbahn 12a hin verjüngt, sodass sich der Strom tragende Materialquerschnitt in Längenrichtung 22 hierdurch im Vergleich zum Materialquerschnitt des Kontaktierungselements 6a verkleinert.

Das in FIG 3 gezeigte Ausführungsbeispiel ist wie das vorhergehende ausgeführt mit dem Unterschied, dass die Kontaktierungselemente 6b und das Ausgleichselement 10b durch ein metallisches Stufenband gebildet sind. Die Beschreibungen zum Ausführungsbeispiel aus FIG 3 und den nachfolgenden Ausführungsbeispielen beschränken sich im Wesentlichen auf die Unterschiede zum jeweils vorangegangenen Ausführungsbeispiel, auf das bezüglich gleich bleibender Merkmale und Funktionen verwiesen wird. Um nicht bereits Beschriebenes mehrfach ausführen zu müssen, sind generell alle Merkmale eines vorangegangenen Ausführungsbeispiels in jeweils folgendes Ausführungsbeispiel übernommen, ohne das sie erneut beschrieben sind, es sei denn, Merkmale sind als Unterschiede zu dem vorangegangenen Ausführungsbeispiel beschrieben. Zum einfacheren Verständnis sind außerdem gleiche Bauteile in verschiedenen Ausführungsbeispielen mit den gleichen Bezugsziffern und anderen Bezugsbuchstaben bezeichnet, wobei sie identisch zueinander oder mit geringfügigen Unterschieden, zum Beispiel in Abmessung, Position, Formgebung und/oder Funktion zueinander sein können. Wird die Bezugsziffer alleine ohne einen Bezugsbuchstaben erwähnt, so sind die entsprechenden Bauteile aller Ausführungsbeispiele angesprochen.

Das Stufenband ist im Bereich des Ausgleichselements 10b dicker als im überwiegenden Teil des Bereichs der beiden Kontaktierungselemente 6b. Auch hier reicht der Kontaktierungsbereich 18 jeweils bis zur Materialverjüngung beziehungsweise den Leitungselementen 14b der Leitungsbahn 12b, wobei diese zusammen mit den Kontaktierungselementen 6b in der Draufsicht exakt aussehen, wie in FIG 2 gezeigt, abgesehen von den zusätzlichen und von oben sichtbaren Stufen 24. Die Dicke des Stufenbands ist hierbei in einem Teil des Kontaktierungsbereichs 18, also in einem Teil des Kontaktierungselements 6b, größer als im restlichen Teil des Kontaktierungsbereichs 18 beziehungsweise Kontaktierungselements 6b. Der flachere Teil der Kontaktierungselemente 6b ist hierbei größer als der dickere Teil des Bereichs 18 beziehungsweise Kontaktierungselements 6b. Durch die größere Dicke des Ausgleichselements 10b kann der Strom führende Materialquerschnitt im Bereich der Leitungsbahn 12b gegenüber dem Ausführungsbeispiel aus FIG 1 vergrößert werden, sodass die Stromtragfähigkeit erhöht wird.

Im Ausführungsbeispiel aus FIG 4 ist der Zellverbinder 2c in seiner Geometrie ganz ähnlich zu demjenigen im Ausführungsbeispiel aus FIG 2 ausgeführt. FIG 4 zeigt den Zellverbinder 2c perspektivisch, sodass die Längenrichtung 22 von einem Kontaktierungselement 6c zum anderen sowie die Breitenrichtung 26 und die Dickenrichtung 28 gut sichtbar sind. Auch hier ist das Ausgleichselement 10c mit einer Leitungsbahn 12c mit zwei mäanderförmigen Leitungselementen 14c ausgeführt, die jedoch vollständig nebeneinander angeordnet sind und nicht wie bei dem Ausführungsbeispiel aus FIG 2 teilweise ineinandergreifen. In beiden Ausführungsbeispielen sind die Leitungselemente 14a, 14c mit drei Knicken in eine Richtung und drei Knicken in die entgegengesetzte Richtung ausgeführt, jeweils um 90°. Abrundungen ändern hierbei nichts an der Bezeichnung eines Knicks. Es sind mithin drei gleichsinnige Richtungsänderungen von 90° und jeweils drei entgegengleichsinnigen Richtungsänderungen von 90° vorhanden.

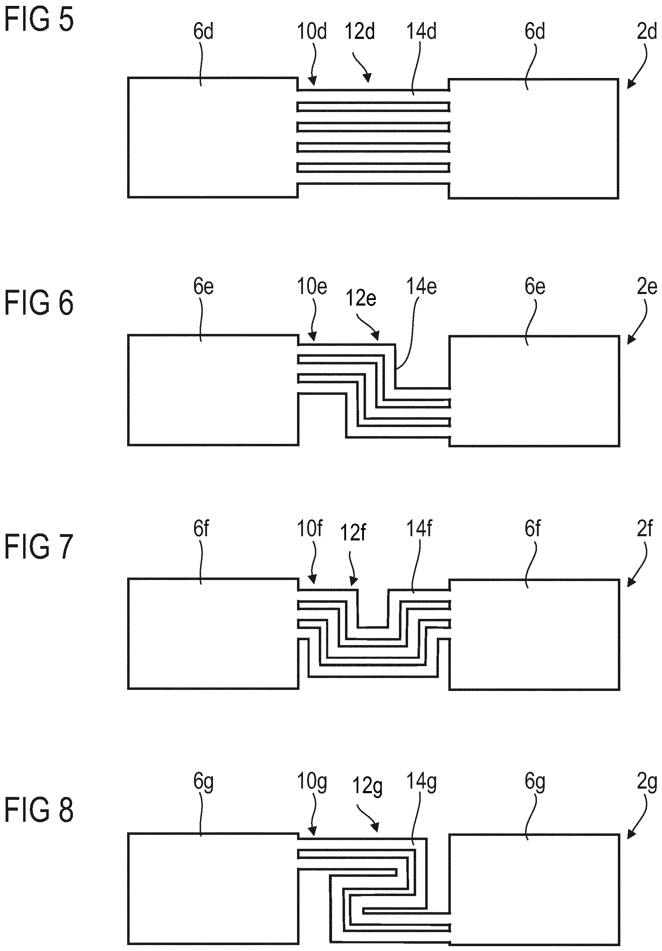

Die Figuren 5 bis 8 zeigen vier Leitungsbahnprinzipien beziehungsweise -geometrien 12d - 12g, die gemäß der Erfindung zur Anwendung kommen können. Bei dem Ausführungsbeispiel aus FIG 5 sind die Kontaktierungselemente 6d durch geradlinige, knickfreie und biegungsfreie Leitungselemente 14d miteinander verbunden. Diese erlauben eine Bewegung der Kontaktierungselemente 6d in vier Dimensionen zueinander, in zwei translatorische Richtungen und zwei rotatorische Richtungen. Ein Ausgleich in Längenrichtung 22 ist nicht möglich.

Bei dem Ausführungsbeispiel aus FIG 6 ist die Federwirkung des Ausgleichselements 10e zwischen den beiden Kontaktierungselementen 6e in allen sechs Dimensionen gegeben. Die Leitungselemente 14e weisen zwei Knicke um jeweils 90° in entgegengesetzte Richtungen auf, die die Federwirkung in den beiden Richtungen, die in dem Ausführungsbeispiel aus FIG 5 starr sind, ermöglicht.

Eine noch elastischere Federwirkung in Längenrichtung 22 wird durch das Ausführungsbeispiel aus FIG 7 erreicht, bei dem die Leitungselemente 14f der Leitungsbahn 12f jeweils vier Knicke um jeweils 90° aufweisen.

Bei dem Ausführungsbeispiel aus FIG 8 ist die Federwirkung in Längenrichtung 22 noch weiter verbessert, indem die Leitungselemente 14g der Leitungsbahn 12g eine einfache Mäanderform aufweisen, die zwei Knicke um jeweils 90° in eine Richtung und nachfolgend zwei Knicke um jeweils 90° in die andere Richtung aufweisen. Durch die Richtungsänderung liegt zwischen den jeweils zwei Knicken ein Wendepunkt der Leitungselemente 14g.

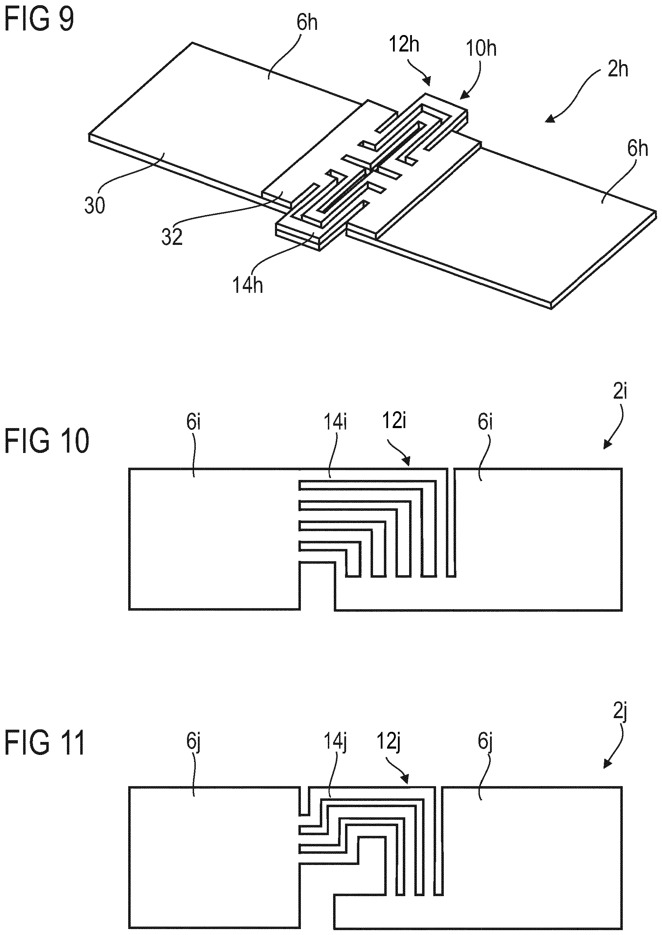

Das Ausführungsbeispiel aus FIG 9 ähnelt in seinem Dickenprofil demjenigen aus FIG 3, wobei jedoch anstelle des Stufenbands eine zweite Blechebene beziehungsweise ein zweites ebenes Blech oder Bandelement 32 die beiden Kontaktierungselemente 6h miteinander verbindet. Der überwiegende Teil der Kontaktierungselemente 6h ist somit durch ein einziges Metallband 30 gebildet, wobei das Ausgleichselement 10h mit seiner Leitungsbahn 12h mit ihren vier Leitungselementen 14h durch die beiden Metallbänder 30, 32 gebildet ist. Die beiden Metallbänder 30, 32 liegen flach aufeinander und sind stoffschlüssig zusammengefügt, beispielsweise durch ein Verschweißen.

Die vier Leitungselemente 14h bilden jeweils eine U-Form, die in der Ebene mit den beiden Kontaktierungselementen 6h liegt und quer zu einer gedachten Verbindungslinie, die die beiden Zellterminals 4 miteinander verbindet, die U-Formen liegen also in Breitenrichtung 26. Jeweils zwei Leitungselemente 14h greifen hierbei gleichsinnig mit beiden U-Schenkeln ineinander ein. Um eine hohe Federwirkung zu erreichen, ragen außerdem die Leitungselemente 14h in Breitenrichtung 26 über die Kontaktierungselemente 6h hinaus.

Die Figuren 10 und 11 zeigen zwei Ausführungsbeispiele mit Leitungsbahnen 12i, 12j mit Leitungselementen 14i, 14j, die eine ungerade Knickzahl aufweisen, in dem Ausführungsbeispiel aus FIG 10 sind es jeweils ein einziger Knick und in dem Ausführungsbeispiel aus FIG 11 sind es jeweils drei Knicke. Mit dieser sehr einfachen Geometrie können jeweils relativ viele Leitungselemente 14i, 14j auf kleinem Raum integriert werden, sodass eine hohe Stromtragfähigkeit erreichbar ist. Die Federwirkung der Ausgleichselemente 10i, 10j ist jedoch - gerade bei dem Ausführungsbeispiel aus FIG 10 - durch die geringe Knickzahl begrenzt.

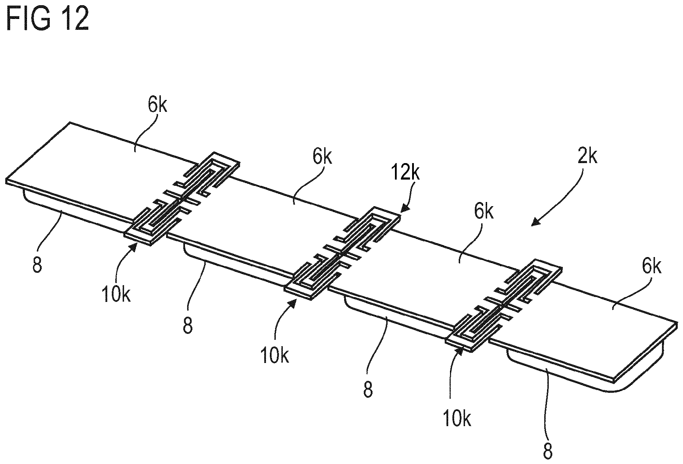

FIG 12 zeigt ein Ausführungsbeispiel, bei dem mehr als zwei Kontaktierungselemente 6k durch mehrere Ausgleichselemente 10k voneinander getrennt sind. Die Geometrie der Ausgleichselemente 10k ist gleich wie im Ausführungsbeispiel aus FIG 9 - abgesehen von nur einem einzigen vorhandenen Metallband, kann jedoch auch in jeglicher anderer Geometrie, wie in den vorangegangenen Ausführungsbeispielen erläutert, gefertigt sein. Zwischen zwei benachbarten Kontaktierungselementen 6k liegt jeweils ein Ausgleichselement 10k, sodass die Kontaktierungselemente 6k weitgehend unabhängig voneinander federnd zueinander gelagert sind. Die Anzahl der Kontaktierungselemente 6k und der zwischen liegenden Ausgleichselemente 10k ist hierbei im Wesentlichen beliebig.

### Bezugszeichenliste

- 2a-k: Zellverbinder
- 4: Zellterminal
- 6a-k: Kontaktierungselement
- 8: Befestigungselement
- 10a-k: Ausgleichselement
- 12a-k: Leitungsbahn
- 14a-k: Leitungselement
- 16: Ebene
- 18: Kontaktierungsbereich
- 20: Ausgleichsbereich
- 22: Längenrichtung
- 24: Stufe
- 26: Breitenrichtung
- 28: Dickenrichtung
- 30: Metallband
- 32: Metallband

## Patentansprüche

1. Zellverbinder (2a-k) zur elektrischen Verbindung von Zellterminals (4) einer Energiespeichereinrichtung aufweisend Kontaktierungselemente (6a-k) zur Verbindung mit jeweils zumindest einem Zellterminal (4) und ein zwei Kontaktierungselemente (6a-k) elektrisch miteinander verbindendes Ausgleichselement (10a-k) mit zumindest einer federnden Leitungsbahn (12a-k), wobei die Leitungsbahn (12a-k) vollständig in einer Ebene mit den beiden Kontaktierungselementen (6a-k) verläuft,
**dadurch gekennzeichnet,**
**dass** die beiden Kontaktierungselemente (6b) und das Ausgleichselement (10b) gemeinsam ein Stufenband bilden mit einer ersten Dicke im Bereich der beiden Kontaktierungselemente (6b) und einer zweiten, größeren Dicke im Bereich des Ausgleichselements (10b).

2. Zellverbinder nach Anspruch 1,
**dadurch gekennzeichnet,**
**dass** die Leitungsbahn (12a-k) einen Materialquerschnitt aufweist, der geringer ist als der Materialquerschnitt der Kontaktierungselemente (6a-k).

3. Zellverbinder nach Anspruch 1 oder 2,
**dadurch gekennzeichnet,**
**dass** die Leitungsbahn (12h) in der Breitenrichtung (26) über die Breite der Kontaktierungselemente (6h) hinausragt.

4. Zellverbinder nach einem der vorhergehenden Ansprüche,
**dadurch gekennzeichnet,**
**dass** die beiden Kontaktierungselemente (6a, 6b-g, 6k) und das Ausgleichselement (10a, 10b-g, 10k) als ebenes Metallblech ausgeführt sind.

5. Zellverbinder nach einem der vorhergehenden Ansprüche,
**dadurch gekennzeichnet,**
**dass** die beiden Kontaktierungselemente (6a-g, 6i-k) und das Ausgleichselement (10a-g, 10i-k) gemeinsam ein Stanzteil sind.

6. Zellverbinder nach einem der vorhergehenden Ansprüche,
**dadurch gekennzeichnet,**
**dass** die Leitungsbahn (12a-c, 12e-k) im Ausgleichselement (10a-c, 10e-k) eine Richtungsänderung um zumindest 90° aufweist.

7. Zellverbinder nach einem der vorhergehenden Ansprüche,
**dadurch gekennzeichnet,**
**dass** die Leitungsbahn (12a-c, 12f-h, 12j-k) im Ausgleichselement (10a-c, 10f-h, 10j-k) zumindest zwei gegenläufige Richtungsänderungen um zumindest 70° aufweist.

8. Zellverbinder nach einem der vorhergehenden Ansprüche,
**dadurch gekennzeichnet,**
**dass** die Leitungsbahn (12a-b, 12f, 12h, 12j-k) im Ausgleichselement (10a-b, 10f, 10h, 10j-k) eine U-Form bildet, die in der Ebene mit den beiden Kontaktierungselementen (6a-b, 6f, 6h, 6j-k) und quer zu einer gedachten Verbindungslinie liegt, die die beiden Zellterminals (8) verbindet.

9. Zellverbinder nach einem der vorhergehenden Ansprüche,
**dadurch gekennzeichnet,**
**dass** die Leitungsbahn (12a-c, 12g) im Ausgleichselement (10a-c, 10g) eine Mäanderform bildet.

10. Zellverbinder nach einem der vorhergehenden Ansprüche,
**dadurch gekennzeichnet,**
**dass** die Leitungsbahn (12e-f) eine ungerade Anzahl Knicke aufweist.

11. Zellverbinder nach einem der vorhergehenden Ansprüche,
**dadurch gekennzeichnet,**
**dass** das Ausgleichselement (10h) zumindest zwei Metallbandebenen (30, 32) aufweist, sodass das Ausgleichselement (10h) eine größere Dicke als die beiden Kontaktierungselemente (6h) aufweist.

## Claims

1. Cell connector (2a-k) for the electrical connection of cell terminals (4) of an energy storage device, having contact-making elements (6a-k) for respective connection to at least one cell terminal (4) and a compensating element (10a-k) connecting two contact-making elements (6a-k) electrically to each other and having at least one springy conductor track (12a-k), wherein the conductor track (12a-k) extends completely in one plane with the two contact-making elements (6a-k),
**characterized in that**
the two contact-making elements (6b) and the compensating element (10b) together form a stepped strip having a first thickness in the region of the two contact-making elements (6b) and a second, greater thickness in the region of the compensating element (10b).

2. Cell connector according to Claim 1,
**characterized in that**
the conductor track (12a-k) has a material cross section which is lower than the material cross section of the contact-making elements (6a-k).

3. Cell connector according to Claim 1 or 2, **characterized in that**
the conductor track (12h) projects in the width direction (26) beyond the width of the contact-making elements (6h) .

4. Cell connector according to one of the preceding claims,
**characterized in that**
the two contact-making elements (6a, 6b-g, 6k) and the compensating element (10a, 10b-g, 10k) are designed as a flat metal sheet.

5. Cell connector according to one of the preceding claims,
**characterized in that**
the two contact-making elements (6a-g, 6-k) and the compensating element (10a-g, 10i-k) are together a stamped part.

6. Cell connector according to one of the preceding claims,
**characterized in that**
the conductor track (12a-c, 12e-k) in the compensating element (10a-c, 10e-k) has a change of direction of at least 90°.

7. Cell connector according to one of the preceding claims,
**characterized in that**
the conductor track (12a-c, 12f-h, 12j-k) in the compensating element (10a-c, 10f-h, 10j-k) has at least two opposite changes of direction of at least 70°.

8. Cell connector according to one of the preceding claims,
**characterized in that**
the conductor track (12a-b, 12f, 12h, 12j-k) in the compensating element (10a-b, 10f, 10h, 10j-k) forms a U shape which is located in the plane with the two contact-making elements (6a-b, 6f, 6h, 6j-k) and transversely with respect to an imaginary connecting line that connects the two cell terminals (8).

9. Cell connector according to one of the preceding claims,
**characterized in that**
the conductor track (12a-c, 12g) in the compensating element (10a-c, 10g) forms a meandering shape.

10. Cell connector according to one of the preceding claims,
**characterized in that**
the conductor track (12e-f) has an odd number of kinks.

11. Cell connector according to one of the preceding claims,
**characterized in that**
the compensating element (10h) has at least two metal strip planes (30, 32), so that the compensating element (10h) has a greater thickness than the two contact-making elements (6h).

## Revendications

1. Connecteur de cellule (2a-k) destiné à la connexion électrique de bornes de cellule (4) d'un dispositif accumulateur d'énergie, présentant des éléments de mise en contact (6a-k) destinés à la connexion à respectivement au moins une borne de cellule (4), et un élément de compensation (10a-k) connectant électriquement deux éléments de mise en contact (6a-k) l'un à l'autre et doté d'au moins une piste conductive élastique (12a-k), la piste conductive (12a-k) s'étendant entièrement dans un plan comprenant les deux éléments de mise en contact (6a-k),
**caractérisé en ce que** les deux éléments de mise en contact (6b) et l'élément de compensation (10b) forment ensemble une bande étagée ayant une première épaisseur dans la zone des deux éléments de mise en contact (6b) et une deuxième épaisseur, plus grande, dans la zone de l'élément de compensation (10b).

2. Connecteur de cellule selon la revendication 1, **caractérisé en ce que** la piste conductive (12a-k) présente une section transversale de matériau qui est inférieure à la section transversale de matériau des éléments de mise en contact (6a-k).

3. Connecteur de cellule selon la revendication 1 ou 2, **caractérisé en ce que** la piste conductive (12h) fait saillie dans la direction de la largeur (26) au-delà de la largeur des éléments de mise en contact (6h).

4. Connecteur de cellule selon l'une quelconque des revendications précédentes, **caractérisé en ce que** les deux éléments de mise en contact (6a, 6b-g, 6k) et l'élément de compensation (10a, 10b-g, 10k) sont réalisés sous la forme d'une tôle métallique plane.

5. Connecteur de cellule selon l'une quelconque des revendications précédentes, **caractérisé en ce que** les deux éléments de mise en contact (6a-g, 6i-k) et l'élément de compensation (10a-g, 10i-k) sont ensemble une pièce découpée.

6. Connecteur de cellule selon l'une quelconque des revendications précédentes, **caractérisé en ce que** la piste conductive (12a-c, 12e-k) dans l'élément de compensation (10a-c, 10e-k) présente un changement de direction d'au moins 90°.

7. Connecteur de cellule selon l'une quelconque des revendications précédentes, **caractérisé en ce que** la piste conductive (12a-c, 12f-h, 12j-k) dans l'élément de compensation (10a-c, 10f-h, 10j-k) présente au moins deux changements de direction opposés d'au moins 70°.

8. Connecteur de cellule selon l'une quelconque des revendications précédentes, **caractérisé en ce que** la piste conductive (12a-b, 12f, 12h, 12j-k) dans l'élément de compensation (10a-b, 10f, 10h, 10j-k) constitue une forme de U qui se situe dans le plan comprenant les deux éléments de mise en contact (6a-b, 6f, 6h, 6j-k) et transversalement à une ligne de liaison imaginaire qui relie les deux bornes de cellule (8) .

9. Connecteur de cellule selon l'une quelconque des revendications précédentes, **caractérisé en ce que** la piste conductive (12a-c, 12g) dans l'élément de compensation (10a-c, 10g) constitue une forme de méandre.

10. Connecteur de cellule selon l'une quelconque des revendications précédentes, **caractérisé en ce que** la piste conductive (12e-f) présente un nombre impair de coudes.

11. Connecteur de cellule selon l'une quelconque des revendications précédentes, **caractérisé en ce que** l'élément de compensation (10h) présente au moins deux plans de bande métallique (30, 32) de sorte que l'élément de compensation (10h) présente une plus grande épaisseur que les deux éléments de mise en contact (6h).
